# EUROPÄISCHE PATENTSCHRIFT

(11) **EP 3 109 340 B1**
(45) Veröffentlichungstag und Bekanntmachung des Hinweises auf die Patenterteilung: **29.07.2020**
(21) Anmeldenummer: 16175676.2
(22) Anmeldetag: 22.06.2016
(51) Int. Cl.: C23C 28/00, C23C 10/28, C23C 10/30, C23C 10/36, C23C 10/60, C23C 24/08, F16B 33/06

(54) **VERFAHREN ZUR HERSTELLUNG EINER SCHRAUBE SOWIE SCHRAUBE**
METHOD OF FABRICATION OF A SCREW AND SCREW
PROCÉDÉ DE FABRICATION D'UNE VIS ET VIS

(30) Priorität: 23.06.2015 DE 102015211626
(43) Veröffentlichungstag der Anmeldung: 28.12.2016
(73) Patentinhaber: Richard Bergner Verbindungstechnik GmbH & Co.KG, 91126 Schwabach (DE)
(72) Erfinder: BINGESER, Roland, 90453 Nürnberg (DE); PRAMSCHÜFER, Helene, 90763 Fürth (DE)
(74) Vertreter: FDST Patentanwälte

(56) Entgegenhaltungen:
- EP-A2- 1 612 396
- WO-A1-2004/099468
- WO-A1-2015/055756
- DE-A1- 2 616 720
- DE-A1- 10 323 169
- DE-A1-102006 008 910
- DE-A1-102008 007 977
- DE-U1-202005 013 320
- US-A1- 2009 266 454
- US-A1- 2009 290 953

## Beschreibung

Die Erfindung betrifft ein Verfahren zur Herstellung einer Schraube aus einem metallischen Grundwerkstoff, auf dem eine Beschichtung aus einem metallischen Werkstoff aufgebracht ist. Weiterhin betrifft die Erfindung eine Schraube mit einer derartigen Beschichtung.

Bei Verbindungselementen, insbesondere bei Schrauben, ist es grundsätzlich bekannt, zur Ausbildung von gewünschten Oberflächeneigenschaften auf einen Grundwerkstoff eine Beschichtung aufzubringen. Hierzu sind unterschiedliche Beschichtungsverfahren bekannt.

Aus der zum Anmeldezeitpunkt unveröffentlichten DE 10 2014 216 790.6 ist ein Verfahren zur Herstellung einer Schraube zu entnehmen, bei dem insbesondere auf einen Leichtmetall-Grundwerkstoff eine edlere Beschichtung aufgebracht wird. Diese Schraube ist insbesondere für die Verwendung im Leichtbau, speziell bei CFK-Bauteilen zur Vermeidung von Kontaktkorrosion vorgesehen. Die Beschichtung wird hierbei vor dem Walzen des Gewindes aufgebracht.

Bei Schrauben in hoch beanspruchten Bereichen, insbesondere beispielsweise bei Motorschrauben, welche also bei Verbrennungsmotoren zur Verbindung von Bauteilen des Verbrennungsmotors eingesetzt sind, besteht häufig das Problem, dass diese sich nicht wiederholt oder nur wenige Male mit einem vorgesehenen Anzugdrehmoment festziehen lassen. Aufgrund der hohen Belastung und der üblicherweise hohen Anzugsdrehmomente werden als Motorschrauben hochfeste Schrauben, insbesondere aus Stahl eingesetzt.

Vor dem erstmaligen Einsatz der Schraube wird auf diese daher häufig eine Gleitbeschichtung aufgebracht. Üblicherweise werden die hochfesten Schrauben hierzu phosphatiert und ergänzend auch geölt. Derartige behandelte Motorschrauben lassen sich einige wenige Male lösen und festziehen. Ein Verfahren zum Phospahtieren beispielsweise auch von Schrauben oder verzinkten Oberflächen ist aus der WO 2004/099468 A1 zu entnehmen.

Allerdings besteht hier allgemein das Problem, dass aufgrund der aufgebrachten Beschichtung die Gefahr einer Versprödung oder Beschädigung der Schraube durch lokale Beizangriffe oder durch in die Oberfläche eindringenden atomaren Wasserstoff besteht. Auch ist die Anzahl der Schraubvorgänge typischerweise auf maximal drei Schraubvorgänge begrenzt. Ein weiteres Problem ist in dem speziellen Phosphatierverfahren zu sehen. Hierzu werden nämlich die Schrauben in einer Trommel umgewälzt, was zu einer mechanischen Beschädigung des Gewindes vor dem ersten Einsatz führen kann.

Zur Herstellung von kaltumgeformten metallischen Formkörpern, die auch aus einem verzinkten Stahl bestehen können, ist es beispielsweise aus der WO 2015/055756 A1 bekannt, vor dem Umformvorgang, beispielsweise vor einem Stauchprozess oder vor einem Gewindewalzen eine Oxalatschicht als Trennschicht zwischen dem Formkörper und einem Umformwerkzeug aufzubringen.

Ausgehend hiervon liegt der Erfindung die Aufgabe zugrunde, eine Schraube, speziell eine hochfeste Motorschraube, sowie ein Verfahren zu deren Herstellung anzugeben, welche gute Gleiteigenschaften für ein mehrfaches Festziehen aufweist.

Die Aufgabe wird gemäß der Erfindung gelöst durch ein Verfahren zur Herstellung einer Schraube mit den Merkmalen des Anspruchs 1 sowie durch eine Schraube mit den Merkmalen des Anspruchs 6. Die im Hinblick auf das Verfahren angeführten Merkmale sind sinngemäß auch auf die Schraube und umgekehrt zu übertragen.

Die Schraube umfasst hierbei einen Grundkörper aus einem metallischen Grundwerkstoff, auf dem eine Beschichtung aus einem metallischen Werkstoff aufgebracht ist. Für den metallischen Werkstoff der Beschichtung ist dabei Zink oder eine Zinklegierung ausgewählt, welche bei der Herstellung auf einen Rohling, bestehend aus dem Grundwerkstoff, aufgebracht wird, um eine Gleitbeschichtung auszubilden. Anschließend wird der derart beschichtete Rohling in einem Umformprozess zu einer gewünschten Endgeometrie umgeformt. Entsprechend weist auch das endgefertigte Verbindungselement eine Gleitbeschichtung aus Zink oder einer Zinklegierung auf, welche auf einem Grundkörper aus dem Grundwerkstoff aufgebracht ist. Für das Aufbringen der Gleitbeschichtung können an sich bekannte beispielsweise chemische oder physikalische Beschichtungsverfahren zum Aufbringen derartiger Zink-Beschichtungen eingesetzt werden, wie sie dem Fachmann bekannt sind, um eine insbesondere gleichmäßige und homogene Beschichtung zu erzeugen.

Diese Ausgestaltung beruht dabei auf der Überlegung, anstelle der bisher üblichen Phosphatierung eine Gleitbeschichtung auf Zink-Basis auszubilden, die sich besonders dauerhaft aufbringen lässt. Von weiterer besonderer Bedeutung ist dabei, dass die Gleitbeschichtung bereits vor dem insbesondere letzten Umformprozess des Verbindungselements ausgebildet wird. Bei der Ausbildung des Verbindungselements als eine Schraube erfolgt die Aufbringung der Gleitbeschichtung daher vor dem Ausbilden des Gewindes. Hierdurch wird sichergestellt, dass nach dem Aufbringen der Gleitbeschichtung keine mechanische Belastung und damit die Gefahr einer mechanischen Beschädigung des ausgebildeten Gewindes erfolgt. Durch die Wahl einer Zink-basierten Gleitbeschichtung wird insgesamt auch bei hoch belasteten Schrauben ein mehrfaches wiederholtes Lösen und Anziehen der Schraube gewährleistet.

Zum Aufbringen der Beschichtung ist üblicherweise ein Wärmeeintrag erforderlich. Ein weiterer entscheidender Aspekt bei dem hier beschriebenen Verfahren, bei dem die Beschichtung vor dem Umformprozess zur Ausbildung der Endgeometrie aufgebracht wird, ist darin zu sehen, dass bei dem Umformprozess hervorgerufene, gewünschte Eigenschaftsverbesserungen beibehalten bleiben und nicht wieder durch eine nachfolgende Wärmebehandlung aufgehoben werden.

Bei dem Umformprozess handelt es sich vorzugsweise um eine Kaltumformung. Bei dieser Kaltumformung werden insbesondere Druckeigenspannungen eingebracht. Beim Anwendungsfall der Schraube ist dies von besonderem Vorteil, da beim Formen des Gewindes, beispielsweise durch einen Gewindewalzvorgang durch die eingebrachten Druckeigenspannungen die Dauerhaltbarkeit der Schraube insgesamt deutlich erhöht wird. Dies ist speziell bei hoch belasteten Schrauben, insbesondere bei Motorschrauben, von besonderer Bedeutung.

Die Gleitbeschichtung wird dabei vorzugsweise als eine Diffusionsschicht ausgebildet, sie wird also mit Hilfe eines Diffusionsverfahrens aufgebracht. Hierzu wird vorzugsweise der metallische Werkstoff in Pulverform bei erhöhter Temperatur mit dem Rohling in Kontakt gebracht, sodass der metallische Werkstoff durch einen Diffusionsprozess zumindest teilweise in den Grundwerkstoff des Rohlings eindringt. Unter erhöhter Temperatur wird dabei insbesondere eine Temperatur im Bereich von 250°C bis 500°C eingestellt.

Ein derartiges Diffusionsverfahren zur Ausbildung einer Zink-Beschichtung ist grundsätzlich beispielsweise aus der DE 10 2008 007 977 A1 für Karosseriebauteile bekannt. Dieses spezielle Verfahren ist allgemein auch unter dem Begriff Diffusionsverzinken oder Thermodiffusionsverzinken bekannt. Der in Pulverform vorliegende metallische Werkstoff, nachfolgend auch als Zinkpulver bezeichnet, wird hierbei üblicherweise zusammen mit einem inerten Füller, wie beispielsweise Quarzsand oder Korund, dem Verbindungselement gemeinsam in einem Behälter beigefügt. Durch die erhöhte Temperatur verdampft Zink und diffundiert in das Metallsubstrat ein und bildet dort an der Oberfläche eine sehr gut haftende Legierung mit den Bestandteilen Zink und dem Grundwerkstoff, insbesondere Eisen / Stahl aus.

Insgesamt wird mit dem hier beschriebenen Verfahren eine festsitzende, sehr homogene Gleitbeschichtung mit definiertem Reibwert ausgebildet. Beim bevorzugten Anwendungsfall einer Schraube erlaubt diese - im Vergleich zu herkömmlichen phosphatierten Schrauben - vergleichsweise dauerhafte Gleitbeschichtung vorzugsweise ein bis zu 10-maliges Festziehen der Schraube mit dem vorgesehenen Anzugsdrehmoment, und zwar innerhalb von definierten Reibwert-Grenzen. Gleichzeitig bleiben die geforderten Eigenschaften für die Dauerhaltbarkeit erhalten.

Im Hinblick auf ein möglichst effizientes Verfahren ist dabei vorgesehen, dass eine Vielzahl von Rohlingen gemeinsam mit dem Zinkpulver in einen Behälter eingebracht werden, welcher während des Beschichtungsverfahrens bewegt wird, sodass eine gute Vermischung zwischen den Rohlingen und dem Zinkpulver erreicht wird, um eine möglichst homogene Gleitbeschichtung auszubilden. Bei dem Behälter handelt es sich dabei beispielsweise um einen Schüttelbehälter und insbesondere um eine im Prozess rotierende Trommel.

Wie bereits ausgeführt, handelt es sich bei dem Verbindungselement um eine Schraube, welche einen Schaftbereich sowie einen Kopfbereich aufweist. Der Rohling weist bereits einen Schaftbereich sowie einen Kopfbereich auf und in den Schaftbereich des Rohlings wird nach dem Beschichten ein Gewinde eingeformt. Dies erfolgt dabei üblicherweise mit Hilfe eines kaltumformenden Verfahrens, wie beispielsweise Walzen oder Rollen.

Zur Herstellung von Schrauben wird üblicherweise allgemein derart vorgegangen, dass aus einem stabförmigen Strang bestehend aus dem Grundwerkstoff zunächst einzelne Vor-Rohlinge abgelängt werden, welche dann in einem ersten Grob-Umformprozess zur Ausbildung des Kopfbereiches umgeformt, insbesondere gestaucht werden, um den Rohling auszubilden. Während des Herstellverfahrens werden das stabförmige Ausgangsmaterial, der Vor-Rohling oder auch der Rohling thermischen Behandlungen beispielsweise zum Härten unterworfen.

Zweckdienlicherweise erfolgt nach dem Ausbilden des Gewindes jedoch kein thermischer Behandlungsschritt mehr, nach Ausformung des Gewindes wird die Schraube daher insbesondere keiner Temperatur z.B. über 100°C und speziell keiner Temperatur über 220°C ausgesetzt. Dadurch wird gewährleistet, dass die beim Umformprozess eingebrachten Druckeigenspannungen nicht wieder unerwünscht abgebaut werden und damit die Dauerhaltbarkeit wieder verloren ginge.

Zweckdienlicherweise wird nach der Ausbildung der Endgeometrie, also insbesondere nach dem Gewindewalzen, noch ein Gleitschmierstoff auf die Gleitbeschichtung aufgebracht. Bei diesem Gleitschmierstoff handelt es sich beispielsweise um Öle oder sogenannte Trockenschmierstoffe / Versiegelungen. Mit Hilfe dieses Gleitschmierstoffes wird ein definierter Reibwert eingestellt, sodass beim Befestigen der Schraube definierte Reibverhältnisse vorliegen und damit auch vorgegebene, definierte Anzugsdrehmomente zuverlässig eingehalten werden können. Letzteres ist insbesondere bei einer automatisierten Montage von wesentlicher Bedeutung. Ein derartiger Gleitschmierstoff wird beispielsweise im Tauchverfahren mit anschließender Trocknung z. B. bei erhöhten Temperaturen um 80°C aufgebracht.

Bei dem Verfahren wird dabei die Gleitbeschichtung mit einer Schichtdicke im Bereich von 5µm bis 30µm aufgebracht. Diese vergleichsweise dünne Beschichtung ist dabei ausreichend, um die gewünschten Gleiteigenschaften auszubilden. Gleichzeitig wird durch das hier gewählte Verfahren eine sichere Haftung der Gleitbeschichtung auf dem Grundwerkstoff gewährleistet.

Durch den nachfolgenden Umformprozess wird die Schichtdicke dabei in den umgeformten Bauteilbereichen verändert. Die auf dem Rohling ursprünglich mit gleichmäßiger Dicke homogen aufgebrachte Gleitbeschichtung weist daher als kennzeichnendes Merkmal des hier beschriebenen Verfahrens, bei dem die Umformung zur Endgeometrie nach dem Aufbringen der Beschichtung erfolgt, eine variierende Schichtdicke auf.

Da beim Gewindewalzen eine Streckung erfolgt, also im Gewindebereich gestreckte Teilbereiche ausgebildet werden, weist die Schichtdicke bei der endgefertigten Schraube im Schaftbereich, speziell im Gewindebereich eine geringere Schichtdicke als im Kopfbereich auf.

Zweckdienlicherweise liegt die Schichtdicke dabei in diesen gestreckten Teilbereichen lediglich im Bereich von 1µm bis 15µm und vorzugsweise lediglich im Bereich bis maximal 10µm. Demgegenüber liegt sie in den umformfreien Teilbereichen, also insbesondere im nach dem Aufbringen der Gleitbeschichtung unverformten Kopfbereich, bei der ursprünglichen aufgebrachten Schichtdicke im Bereich zwischen 5µm und 30µm.

Bei der Schraube handelt es sich weiterhin um eine sogenannte hochfeste Schraube. Hierunter werden insbesondere Schrauben verstanden, wie sie in der DIN-IN ISO 898-1 in der Festigkeitsklasse 10.9 klassifiziert sind. Speziell weisen diese Schrauben eine Festigkeit von >1.000 MPa auf.

Vorzugsweise handelt es sich bei den Schrauben um Motorschrauben. Im eingebauten Endzustand verbinden daher die Schrauben zwei Motorbauteile eines Verbrennungsmotors miteinander. Speziell ist sie als Pleuelschraube ausgebildet und stellt im Motor die Verbindung zwischen einer Kurbelwelle und der Pleuelstange her, welche den Kolben trägt, welcher in den Verbrennungsraum des Verbrennungsmotors ragt.

Für den metallischen Grundwerkstoff wird dabei vorzugsweise Stahl verwendet. Alternativ werden Edelstahl, Titan oder auch eine Nickellegierung verwendet. Leichtbaumetallstoffe, wie beispielsweise Aluminium, Magnesium und deren Legierungen werden demgegenüber vorzugsweise nicht als Grundwerkstoff eingesetzt.

Ein Ausführungsbeispiel der Erfindung wird nachfolgend anhand der Figuren näher erläutert. Diese zeigen in vereinfachten Darstellungen:
- Fig. 1: den Ablauf von verschiedenen Prozessschritten zur Herstellung einer mit einer Gleitbeschichtung versehenen Schraube, und
- Fig. 2: eine ausschnittsweise vergrößerte Darstellung eines mit einem Gewinde versehenen Schaftbereichs der Schraube.

In einem ersten Schritt wird zunächst ein Rohkörper, insbesondere ein als Meterware hergestellter Rohdraht 2 aus einem Grundwerkstoff, insbesondere Stahl, bereitgestellt. Aus diesem Rohdraht 2 wird durch Ablängen ein bolzenförmiger Vor-Rohling 4 hergestellt. Dieser wird nachfolgend in einem ersten Umformvorgang zu einem Rohling 6 ausgebildet. Hierzu wird der Vor-Rohling 4 durch einen Stauchvorgang derart umgeformt, dass ein Kopfbereich 8 mit einem sich daran anschließenden Schaftbereich 10 ausgebildet ist.

Auf den Rohling 6 wird anschließend eine Zink-Gleitbeschichtung 12 mit einer Schichtdicke d aufgebracht. Zur Ausbildung der Gleitbeschichtung 12 wird hierbei ein Zink-Diffusionsverfahren eingesetzt. Hierbei werden vorzugsweise eine Vielzahl von Rohlingen 6 gemeinsam in eine rotierende Trommel zusammen mit einem Zinkpulver und üblicherweise ergänzend mit weiteren inerten Partikeln, wie beispielsweise Quarzsand oder Korund gegeben. Die Rohlinge 6 werden zusammen mit dem Zinkpulver innerhalb der Trommel erwärmt, typischerweise auf Temperaturen im Bereich von 250°C bis maximal 600°C, üblicherweise bis maximal 500°C. Aufgrund des niedrigen Schmelzpunktes des Zinks verdampft dieses bereits bei etwa 300°C und diffundiert in den Grundwerkstoff des Rohlings 6. Es bildet an der Oberfläche eine Zink-Eisen-Legierung aus. Ein besonderer Vorteil dieses Verfahrens ist darin zu sehen, dass auf der einen Seite eine sehr homogene, gleichmäßige und gut haftende Zink-Gleitbeschichtung 12 ausgebildet wird, die sich zudem kostengünstig und prozesssicher durch das hier beschriebene Zink-Diffusionsverfahren aufbringen lässt.

Nach dem Beschichtungsvorgang ist der Rohling 6 vollständig mit der Gleitbeschichtung 12 mit konstanter Schichtdicke d überzogen. Insbesondere ist daher sowohl der Schaftbereich 10 als auch der Kopfbereich 8 gleichmäßig mit homogener Schichtdicke d überzogen. Bevorzugt sind auch die Stirnseiten sowohl des Schaftbereichs 10 als auch des Kopfbereiches 8 sind mit der Beschichtung 12 überzogen.

Nachfolgend zum Beschichtungsvorgang wird der beschichtete Rohling 6 in einem nachfolgendem Prozessschritt einem End-Umformprozess unterzogen, sodass die gewünschte Endgeometrie erzeugt und die fertige Schraube 16 ausgebildet wird. Bei diesem letzten Umformprozess handelt es sich dabei um einen Walzprozess zur Ausbildung eines Gewindes 18.

Schließlich wird in hier nicht näher dargestellter Weise auf die Gleitbeschichtung 12 vorzugsweise noch ein Gleitschmierstoff aufgebracht. Über diesen wird ein definierter Reibwert für den vorgesehenen Anwendungszweck und der vorgesehenen Werkstoffpaarung zwischen der Schraube und dem zu verbindenden Bauteil eingestellt.

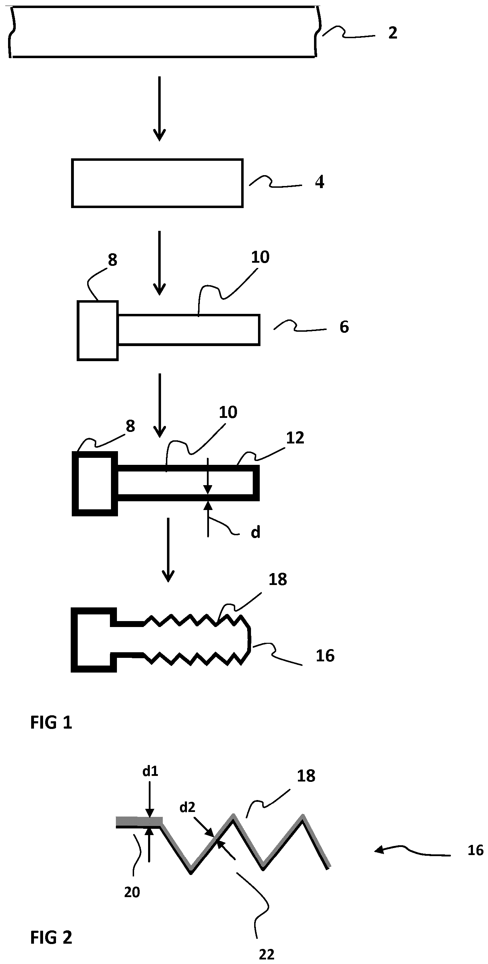

Fig. 2 zeigt eine stark vereinfachte und vergrößerte ausschnittsweise Darstellung des Schaftbereichs 10 der Schraube 16. Der Schaftbereich 10 weist allgemein einen zum Kopfbereich 8 orientierten typischerweise zylinderförmigen Teilabschnitt auf, welcher einen gewindefreien Bereich 20 definiert, sowie im vorderen Teilabschnitt einen Gewindebereich 22. Da der gewindefreie Bereich 20 bei der Endumformung, also beim Walzen des Gewindes 18, nicht mehr umgeformt wird, wird dieser gewindefreie Bereich 20 auch als nicht umgeformter Teilbereich bezeichnet. Demgegenüber bildet der Gewindebereich 22 einen umgeformten Teilbereich. Die Begriffe umgeformter und nicht umgeformter Teilbereich beziehen sich dabei auf den Umformvorgang, nachdem die Beschichtung 12 aufgebracht wurde.

Infolge des Gewindeformens handelt es sich bei dem umgeformten Teilbereich um einen gestreckten Teilbereich, bei dem also der beschichtete Rohling 6 beim Umformprozess einer Streckung unterzogen wird.

Aufgrund der Umformung variiert die Schichtdicke d der Beschichtung 12. Sie weist im gewindefreien, nicht umgeformten Teilbereich 20 und damit insbesondere auch allgemein im Kopfbereich 8, eine erste Schichtdicke d1 sowie im Gewindebereich 22 eine zweite Schichtdicke d2 auf. Die erste Schichtdicke d1 entspricht dabei aufgrund der umformfreien Zone der ursprünglich aufgebrachten Schichtdicke d. Diese liegt typischerweise im Bereich zwischen 5µm und 30µm.

Demgegenüber ist die zweite Schichtdicke d2 im umgeformten Gewindebereich 22 reduziert und weist beispielsweise lediglich noch eine Schichtdicke d2 im Bereich von 1µm bis maximal 10µm auf. Die Schichtdicke d variiert allgemein in Abhängigkeit des Umformgrades im umgeformten Teilbereich 22. Auch innerhalb des umgeformten Gewindebereichs 22 können unterschiedliche Umformgrade und damit Variationen in der Schichtdicke d auftreten. Der höchste Umformgrad tritt typischerweise im Bereich eines Gewindegrundes auf, sodass im Gewindegrund eine geringere Schichtdicke d als an den Gewindeflanken vorliegt. Im Ausführungsbeispiel wurde der Einfachheit halber auf die Darstellung einer variierenden Schichtdicke d innerhalb des Gewindebereichs 22 verzichtet.

Die beschriebene Schraube 16 mit der aufgebrachten Zink-Gleitbeschichtung 12 wird vorzugsweise als Motorschraube, insbesondere als Pleuelschraube eingesetzt. Es handelt sich hierbei allgemein um eine hochfeste Schraube, welche für hoch belastete Anwendungsfälle ausgebildet ist.

Durch das hier beschriebene spezielle Herstellverfahren und der Verwendung des Zink-Diffusionsverfahrens wird in prozesstechnisch einfacher und kostengünstigerweise eine dauerhaft wirksame Gleitbeschichtung 12 ausgebildet, welche insgesamt sehr homogen ist.

Durch diese neue Beschichtung 12 ist zum einen ein mehrfaches Anziehen der Schraube bis zu einer Verformung, also bis zu dem üblicherweise erforderlichen Anzugsdrehmoment ermöglicht. Insgesamt ist mit derartigen Schrauben ein zumindest fünffaches und vorzugsweise ein bis zu zehnfaches wiederholtes Festziehen mit dem erforderlichen Anzugsdrehmoment ermöglicht, wobei der Reibwert für alle wiederholten Festziehoperationen innerhalb eines zulässigen, vorgegebenen Toleranzbereichs liegt und einen definierten oberen Grenzwert nicht überschreitet. Bei herkömmlichen beispielsweise phosphatierten Schrauben war bisher lediglich ein dreifaches Anziehen bis in die Verformung möglich. Bei weiteren Montagen steigt bei herkömmlichen Schrauben der Reibwert über zulässige Grenzen und das Bauteil musste ausgetauscht werden. Durch die hier beschriebene spezielle Zink-Gleitbeschichtung 12 wird daher die Dauer-Einsatzfähigkeit erhöht.

Ein weiterer entscheidender Vorteil der hier beschriebenen Schraube 16 ist auch darin zu sehen, dass die Gleitbeschichtung 12 vor dem Gewindewalzvorgang aufgebracht wird, sodass die mit dem Walzvorgang eingebrachten Druckeigenspannungen nicht durch die beim Beschichten erhöhte Temperatur wieder zurückgefahren werden. Durch das hier beschriebene Verfahren werden daher die erforderlichen mechanischen Eigenschaften beibehalten, sodass eine ausreichende Dauerhaltbarkeit gewährleistet ist.

### Bezugszeichenliste

- 2: Rohdraht
- 4: Vor-Rohling
- 6: Rohling
- 8: Kopfbereich
- 10: Schaftbereich
- 12: Gleitbeschichtung
- 16: Schraube
- 18: Gewinde
- 20: gewindefreier Teilbereich
- 22: Gewindebereich

- d,d1,d2: Schichtdicke der Beschichtung

## Patentansprüche

1. Verfahren zur Herstellung einer Schraube (16) aus einem metallischen Grundwerkstoff, auf dem eine Beschichtung aus einem metallischen Werkstoff aufgebracht ist, bei dem zunächst ein Rohling (6) mit einem Schaftbereich (10) sowie mit einem Kopfbereich (12) bereitgestellt wird, der durch einen Grob-Umformprozess hergestellt ist
**dadurch gekennzeichnet,**
**dass** der metallische Werkstoff Zink oder eine Zinklegierung ist, welche auf den Rohling (6) aus dem Grundwerkstoff zur Ausbildung der Beschichtung als Gleitbeschichtung (12) für ein mehrmaliges Festziehen der Schraube (16) aufgebracht wird und dass anschließend nach dem Beschichten in einem Umformprozess in den Schaftbereich (10) ein Gewinde (18) eingeformt wird.

2. Verfahren nach dem vorhergehenden Anspruch,
**dadurch gekennzeichnet,**
**dass** die Gleitbeschichtung (12) mit Hilfe eines Zink-Diffusionsverfahrens aufgebracht wird, bei dem der metallische Werkstoff in Pulverform bei erhöhter Temperatur mit dem Rohling (6) in Kontakt gebracht wird, sodass der metallische Werkstoff durch einen Diffusionsprozess in den Grundwerkstoff des Rohlings (6) eindringt.

3. Verfahren nach einem der vorhergehenden Ansprüche,
**dadurch gekennzeichnet,**
**dass** das Verbindungselement nach dem Umformprozess keiner thermischen Behandlung mehr unterzogen wird.

4. Verfahren nach einem der vorhergehenden Ansprüche,
**dadurch gekennzeichnet,**
**dass** nach der Ausbildung des Gewindes (18) auf die Gleitbeschichtung (12) ein Gleitschmierstoff zur Einstellung eines definierten Reibwertes aufgebracht wird.

5. Verfahren nach einem der vorhergehenden Ansprüche,
**dadurch gekennzeichnet,**
**dass** die Gleitbeschichtung (12) mit einer Schichtdicke (d) im Bereich von 5µm bis 30µm vor dem Umformprozess aufgebracht wird.

6. Schraube (16), insbesondere hergestellt mit einem Verfahren nach einem der vorhergehenden Ansprüche, welche eine Gleitbeschichtung (12) aus Zink oder einer Zinklegierung für ein mehrmaliges Festziehen der Schraube (16) aufweist, welche auf einen Rohling mit einem Schaftbereich (10) sowie mit einem Kopfbereich (12) vor einem Umformprozess zur Ausbildung eines Gewindes im Schaftbereich aufgebracht wurde, wobei der Schaftbereich (10) einen zum Kopfbereich (12) orientierten gewindefreien Bereich (20) sowie in einem vorderen Teilabschnitt einen Geweindebereich (22) aufweist und der Kopfbereich (12) sowie der gewindefreie Bereich (20) einen umformfreien Teilbereich bilden und der Gewindebereich (22) einen umgeformten Teilbereich bildet,wobei die Gleitbeschichtung im umformfreien Teilbereich eine konstante Schichtdicke (d) aufweist, und die Schichtdicke (d) im umgeformten Teilbereich kleiner ist als im umformfreien Teilbereich.

7. Schraube (16) Anspruch 6 ,
**dadurch gekennzeichnet,**
**dass** die Schichtdicke (d2) im umgeformten Teilbereich im Bereich von 1µm bis 15µm und vorzugsweise im Bereich von 1µm bis 10µm liegt.

8. Schraube (16)nach einem der Ansprüche 6 bis 7,
**dadurch gekennzeichnet,**
**dass** es sich um eine hochfeste Schraube (16) handelt.

9. Schraube (16)nach einem der Ansprüche 6 bis 8,
**dadurch gekennzeichnet,**
**dass** es sich um eine Motorschraube, insbesondere eine Pleuelschraube handelt, die zwei Bauteile eines Verbrennungsmotors miteinander verbindet.

10. Schraube (16) nach dem vorhergehenden Anspruch,
**dadurch gekennzeichnet,**
**dass** es sich um eine Pleuelschraube handelt.

11. Schraube (16) nach einem der Ansprüche 6 bis 10,
**dadurch gekennzeichnet,**
**dass** der Grundwerkstoff Stahl, Edelstahl, Titan oder eine Nickellegierung ist.

## Claims

1. Method for producing a screw (16) from a metallic base material, to which a coating of a metallic material is applied, in which firstly a blank (6) with a shank region (10) and with a head region (12) is provided, which is produced by a rough forming process
**characterized in**
**that** the metallic material is zinc or a zinc alloy which is applied to the blank (6) made of the base material in order to form the coating as a sliding coating (12) for multiple tightening of the screw (16) and that subsequently after coating a thread (18) is then formed in the shank region (10) in a forming process.

2. Method according to the preceding claim,
**characterized in**
**that** the sliding coating (12) is applied with the help of a zinc diffusion process, in which the metallic material in powder form is brought into contact with the blank (6) at an elevated temperature, so that the metallic material penetrates into the base material of the blank (6) by a diffusion process.

3. Method according to one of the preceding claims,
**characterized in**
**that** the connecting element is no longer subjected to thermal treatment after the forming process.

4. Method according to one of the preceding claims,
**characterized in**
**that**, after the formation of the thread (18), a sliding lubricant is applied to the sliding coating (12) to determine a defined coefficient of friction.

5. Method according to one of the preceding claims,
**characterized in**
**that** the sliding coating (12) is applied with a layer thickness (d) in the range from 5 µm to 30 µm before the forming process.

6. Screw (16), in particular produced with a method according to one of the preceding claims, which has a sliding coating (12) of zinc or a zinc alloy for multiple tightening of the screw (16), which has been applied to a blank with a shank region (10) and with a head region (12) before a forming process for forming a thread in the shank region, wherein the shank region (10) has a thread-free region (20) oriented towards the head region (12) and a threaded region (22) in a front partial section and the head region (12) and the thread-free region (20) form a deformation-free partial region and the threaded region (22) forms a deformed partial region, wherein the sliding coating in the deformation-free partial region has a constant layer thickness (d), and the layer thickness (d) in the deformed partial region is smaller than in the deformation-free partial region.

7. Screw (16) according to Claim 6 ,
**characterized in**
**that** the layer thickness (d2) in the reshaped partial region is in the range from 1 µm to 15 µm and preferably in the range from 1 µm to 10 µm.

8. Screw (16) according to one of Claims 6 to 7,
**characterized in**
**that** it is a high strength screw (16).

9. Screw (16) according to one of Claims 6 to 8,
**characterized in**
**that** it is an engine bolt, in particular a connecting rod bolt, which connects two components of an internal combustion engine with each other.

10. Screw (16) according to the previous claim,
**characterized in**
**that** it is a connecting rod bolt.

11. Screw (16) according to one of Claims 6 to 10,
**characterized in**
**that** the base material is steel, stainless steel, titanium or a nickel alloy.

## Revendications

1. Procédé de fabrication d'une vis (16) en un matériau de base métallique, sur lequel un revêtement en un matériau métallique est appliqué, dans lequel on prévoit d'abord une ébauche (6) avec une zone de tige (10) et avec une zone tête (12), qui est fabriquée par un procédé de formage grossier
**caractérisé en ce**
**que** le matériau métallique est du zinc ou un alliage de zinc qui est appliqué sur l'ébauche (6) en matériau de base pour former le revêtement comme revêtement de glissement (12) pour le serrage répété de la vis (16) et qu'ensuite après le revêtement un filetage (18) est formé dans la zone de la tige (10) dans un processus de formage.

2. Procédé selon la revendication précédente,
**caractérisé en ce**
**que** le revêtement de glissement (12) est appliqué à l'aide d'un procédé de diffusion du zinc, dans lequel le matériau métallique sous forme de poudre est mis en contact avec l'ébauche (6) à une température élevée, de sorte que le matériau métallique pénètre dans le matériau de base de l'ébauche (6) par un procédé de diffusion.

3. Procédé selon l'une des revendications précédentes,
**caractérisé en ce**
**que** l'élément de fixation n'est plus soumis à un traitement thermique après le processus de formage.

4. Procédé selon l'une des revendications précédentes,
**caractérisé en ce**
**que**, après la formation du filetage (18), un lubrifiant de glissement est appliqué sur le revêtement de glissement (12) pour le réglage d'un coefficient de frottement défini.

5. Procédé selon l'une des revendications précédentes,
**caractérisé en ce**
**que** le revêtement de glissement (12) est appliqué avant le processus de formage avec une épaisseur de couche (d) comprise entre 5 µm et 30 µm.

6. Vis (16), en particulier produite selon un procédé selon l'une des revendications précédentes, comprenant un revêtement de glissement (12) en zinc ou en alliage de zinc pour le serrage répété de la vis (16), qui a été appliquée sur une ébauche avec une zone de tige (10) et avec une zone de tête (12) avant un processus de formage pour former un filetage dans la zone de tige, dans lequel la zone de tige (10) comprend une zone sans filetage (20) orientée vers la zone de tête (12) et une zone filetée (22) dans une section partielle antérieure et la zone de tête (12) et la zone sans filetage (20) forment une zone partielle sans déformation et la zone filetée (22) forme une zone partielle déformée, dans lequel le revêtement de glissement dans la zone partielle sans déformation comprend une épaisseur de couche (d) constante, et l'épaisseur de couche (d) dans la zone partielle déformée est plus faible que dans la zone partielle sans déformation.

7. Vis (16) selon la revendication 6,
**caractérisée en ce**
**que** l'épaisseur de la couche (d2) dans la zone partielle déformée est comprise entre 1 µm et 15 µm et, de préférence, entre 1 µm et 10 µm.

8. Vis (16) selon l'une des revendications 6 à 7,
**caractérisée en ce**
**qu'**il s'agit d'une vis à haute résistance (16).

9. Vis (16) selon l'une des revendications 6 à 8,
**caractérisée en ce**
**qu'**il s'agit d'une vis de moteur, en particulier une vis de bielle, qui relie entre eux deux composants d'un moteur à combustion interne.

10. Vis (16) selon la revendication précédente,
**caractérisée en ce**
**qu'**il s'agit d'une vis de bielle.

11. Vis (16) selon l'une des revendications 6 à 10,
**caractérisée en ce**
**que** le matériau de base est l'acier, l'acier inoxydable, le titane ou un alliage de nickel.
